(19) Europäisches Patentamt
European Patent Office
Office européen des brevets

(11) **EP 2 179 499 B1**

(12) **FASCICULE DE BREVET EUROPEEN**

(45) Date de publication et mention
de la délivrance du brevet:
**04.10.2017 Bulletin 2017/40**

(21) Numéro de dépôt: **08786039.1**

(22) Date de dépôt: **10.07.2008**

(51) Int Cl.:
***H02P 21/06*** *(2016.01)*

(86) Numéro de dépôt international:
**PCT/EP2008/058985**

(87) Numéro de publication internationale:
**WO 2009/007416 (15.01.2009 Gazette 2009/03)**

(54) **PROCÉDÉ DE COMMANDE D'UN MOTEUR SYNCHRONE À AIMANTS PERMANENTS ENTERRÉS**

VERFAHREN ZUR STEUERUNG EINES SYNCHRONMOTORS MIT VERGRABENEN PERMANENTMAGNETEN

METHOD OF CONTROLLING A SYNCHRONOUS MOTOR HAVING BURIED PERMANENT MAGNETS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **10.07.2007 FR 0704983**

(43) Date de publication de la demande:
**28.04.2010 Bulletin 2010/17**

(73) Titulaire: **ALSTOM Transport Technologies
93400 Saint-Ouen (FR)**

(72) Inventeur: **ALACOQUE, Jean-Claude
F-69360 Communay (FR)**

(74) Mandataire: **Lavoix
2, place d'Estienne d'Orves
75441 Paris Cedex 09 (FR)**

(56) Documents cités:
**EP-A- 1 233 506    EP-A- 1 484 835**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de commande d'un moteur synchrone à aimants permanents enterrés, un support d'enregistrement et des véhicules pour ce procédé.

On connaît du document EP1233506 un procédé de régulation d'une machine électrique tournante recevant en entrée une tension de commande discrète déterminée de manière à asservir le couple électromagnétique délivré par la machine, sur une valeur de consigne de couple, ce procédé consistant à déterminer à chaque instant d'échantillonnage, la tension de commande discrète à appliquer à la machine en fonction d'au moins un signal échantillonné représentatif du couple électromagnétique de la machine, pour atteindre la valeur de consigne de couple à l'instant d'échantillonnage suivant.

On connaît du document EP1484835 un procédé de régulation du couple électromagnétique instantané d'une machine électrique tournante polyphasée équipée de bobinages statoriques et/ou rotoriques alimentés par une tension et un courant générés par un onduleur, 5 l'onduleur étant formé d'interrupteurs dont la commutation est commandable.

Il est également connu du document US 2006/0284582 un procédé de commande d'un moteur à aimants permanents enterrés d'un véhicule électrique permettant de commander le couple exercé par le moteur électrique de manière à réduire les pertes de cuivre du moteur.

Dans ce type de procédé connu, la régulation de la commande fait intervenir une boucle de rétroaction pour établir la différence entre une consigne de courant et la valeur mesurée du courant effectivement atteint. Ces procédés fonctionnent correctement mais ne permettent pas de réagir assez rapidement à de brusques variations de la tension de ligne, dans le cas d'un véhicule alimenté par une ligne caténaire, ou du couple résistant du moteur. Par exemple, ces brusques variations de la tension de ligne ou du couple résistant peuvent se produire en cas de :

- décollement du pantographe de la caténaire, c'est-à-dire lorsque le pantographe perd le contact mécanique et électrique avec la caténaire,
- recollement du pantographe à la caténaire, c'est-à-dire lorsque le pantographe rétablit le contact mécanique et électrique avec la caténaire, ou
- perte de l'adhérence entre les roues motrices du véhicule électrique et le support de roulement.

Ici, par le terme « caténaire », on désigne aussi bien une ligne aérienne sur laquelle frotte un pantographe pour alimenter le véhicule électrique, qu'un rail posé au sol sur lequel frotte un frotteur pour alimenter un véhicule électrique. Ce rail posé au sol est plus connu sous le terme de « troisième rail ».

L'invention vise à remédier à ces problèmes en proposant un procédé plus rapide de commande d'un moteur synchrone à aimants permanents enterrés d'un véhicule électrique, procédé dit « à réponse pile ». Les procédés de régulation à réponse pile sont plus connus sous le terme anglais de « Deadbeat Control ». Ces procédés permettent d'atteindre, dès le prochain instant de régulation, la consigne de courant sans mettre en oeuvre de boucle de rétroaction.

Conformément à l'invention, le procédé de commande d'un moteur synchrone à aimants permanents enterrés de constante de temps statorique $\tau$, ce procédé consistant à appliquer par un onduleur alimentant le moteur et pendant une période T de calcul, un vecteur de tension permettant d'obtenir, à l'expiration de la période T, une force mécanique développée par la machine égale à une consigne pré-déterminée de force mécanique C, comprend :

- une étape de calcul d'un vecteur propre d'état initial du moteur représentatif du vecteur de courant statorique et du vecteur flux des aimants dans le repère rotorique tournant initial en début de période T,
- une étape d'établissement dans le repère rotorique tournant prédit d'un courant de consigne permettant d'atteindre à la fin de la période T la consigne pré-déterminée de force mécanique C,
- une étape d'établissement d'un vecteur propre d'état de consigne du moteur représentatif du courant de consigne et du vecteur flux des aimants prédit dans le repère rotorique tournant initial en fin de période T,
- une étape de calcul du vecteur de tension dans le repère statorique fixe à appliquer par l'onduleur au moteur pour le piloter,
- une étape d'application sur le moteur du vecteur de tension par l'onduleur pour obtenir à l'expiration de la période T un courant égal au courant de consigne, la période T étant strictement inférieure à 5 $\tau$.

Plus précisément, dans les procédés de régulation à réponse pile ci-dessus, le vecteur de tension à appliquer à l'onduleur est déterminé à partir d'un système d'équations discrétisées qui définissent complètement l'état du moteur sans utiliser de boucle de rétroaction. Ces procédés permettent donc de garantir que le moteur a atteint en une seule fois un état de consigne exactement à la fin de la période T de commande. De plus, puisque la période T est ici choisie petite, c'est-à-dire inférieure à cinq fois la constante de temps statorique $\tau$ du moteur, ces procédés réagissent beaucoup plus rapidement que des procédés de régulation implémentant une boucle de rétroaction. Dans ces conditions, les conséquences des variations de la tension de la ligne ou du couple résistant sont limitées beaucoup plus efficacement en particulier en cas de décollement ou recollement du pantographe, ou en cas de perte d'adhérence.

On remarquera également que les ajustements de la tension de commande se font à des périodes T inférieures à $5\tau$. Les périodes T sont donc très inférieures au temps de mise en vitesse du moteur électrique du fait de l'inertie du véhicule électrique ramenée à l'arbre du moteur et à l'inertie du rotor du moteur électrique lui-même, de sorte qu'ils ne sont pas ressentis par le conducteur ou les passagers de ce véhicule.

Les modes de réalisation de ce procédé de commande peuvent comporter une ou plusieurs des caractéristiques suivantes :

- le vecteur de tension est une solution des relations suivantes :

$$V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

$$V_{q_0} = -\frac{e_2 \cdot \left[ \vec{\Psi}_{1c} - \vec{\Psi}_{10} \cdot e^{\mu_1 \cdot T} \right] - e_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

où :

- $e_1$, $e_2$, $\zeta_1$, $\zeta_2$, $\mu_1$, $\mu_2$ sont des variables intermédiaires dépendant uniquement de paramètres physiques représentatifs du moteur et de la vitesse angulaire $\omega$,
- $\vec{\Psi}_{1c}$, $\vec{\Psi}_{2c}$ sont les coordonnées du vecteur propre d'état de consigne $\vec{\Psi}_c$ à la fin de la période T dans le repère rotorique tournant initial $(d_0, q_0)$ dont l'axe des abscisses est aligné sur la direction du flux magnétique à l'instant initial,
- $\vec{\Psi}_{10}$, $\vec{\Psi}_{20}$ sont les coordonnées du vecteur propre d'état initial $\vec{\Psi}_0$ au début de la période T dans le repère rotorique tournant initial $(d_0, q_0)$ dont l'axe des abscisses est aligné sur la direction du flux magnétique initial ;

- le vecteur propre d'état initial $\vec{\Psi}_0$ est établi à partir de l'équation discrétisée suivante :

$$\begin{bmatrix} \vec{\Psi}_{10} \\ \vec{\Psi}_{20} \end{bmatrix}_{(d_0, q_0)} = \begin{bmatrix} L_d \cdot I_{d_0 0} + \zeta_1 \cdot L_q \cdot I_{q_0 0} + \xi_{d1} \cdot \left\| \vec{\Phi}_a \right\| \\ L_d \cdot I_{d_0 0} + \zeta_2 \cdot L_q \cdot I_{q_0 0} + \xi_{d2} \cdot \left\| \vec{\Phi}_a \right\| \end{bmatrix}$$

reliant entre elles le vecteur de courant statorique initial $\vec{I}_0 = \left( I_{d_0 0}, I_{q_0 0} \right)$, le vecteur de flux des aimants $\vec{\Phi}_a$, les paramètres physiques $L_d$, $L_q$, et les paramètres intermédiaires $\zeta_1$, $\zeta_2$, $\xi_{d1}$, $\xi_{d2}$ dépendants uniquement de paramètres physiques du moteur et de la vitesse angulaire $\omega$ ;

- le vecteur d'état propre $\vec{\Psi}_c$ est établi à partir de l'équation discrétisée suivante :

$$\begin{bmatrix} \vec{\Psi}_{1c} \\ \vec{\Psi}_{2c} \end{bmatrix}_{(d_0, q_0)} = \begin{bmatrix} L_d \cdot I_{d_0 c} + \zeta_1 \cdot L_q \cdot I_{q_0 c} + \xi_{d1} \cdot \Phi_{d_0 P} + \xi_{q1} \cdot \Phi_{q_0 P} \\ L_d \cdot I_{d_0 c} + \zeta_2 \cdot L_q \cdot I_{q_0 c} + \xi_{d2} \cdot \Phi_{d_0 P} + \xi_{q2} \cdot \Phi_{q_0 P} \end{bmatrix}$$

reliant entre elles le vecteur de courant statorique de consigne $\vec{I}_c = \left( I_{d_0 c}, I_{q_0 c} \right)$ à atteindre en fin de période T,

le vecteur de flux des aimants prédit $\vec{\Phi}_P = \left( \Phi_{d_0 P}, \Phi_{q_0 P} \right)$ à atteindre en fin de période T, les paramètres physiques $L_d$, $L_q$, et les paramètres intermédiaires $\zeta_1$, $\zeta_2$, $\xi_{d1}$, $\xi_{d2}$, $\xi_{q1}$, $\xi_{q2}$ dépendants uniquement de paramètres physiques du moteur et de la vitesse angulaire $\omega$ ;

- le fonctionnement du moteur est modélisé par un vecteur d'état $\vec{X}$ formé du vecteur de courant statorique $\vec{I}$ et du

vecteur de flux des aimants $\vec{\Phi}_a$.

Les modes de réalisation présentent en outre les avantages suivants :

- le vecteur de courant statorique est facilement mesurable, ce qui facilite la mise en oeuvre du procédé de commande ; et
- le vecteur de flux des aimants varie plus lentement que le vecteur de courant statorique, ce qui facilite son estimation à l'aide d'un observateur.

L'invention a également pour objet un support d'enregistrement d'informations comportant des instructions pour l'exécution d'un procédé selon l'invention, lorsque ces instructions sont exécutées par un calculateur électronique.
L'invention a également pour objet une unité de commande à réponse pile d'un moteur synchrone à aimants permanents enterrés alimenté par une source de tension et commandable à partir d'un onduleur, cette unité comportant :

- un module d'établissement dans le repère rotorique tournant prédit $(d,q)$ d'un courant de consigne $\vec{I}_c$ permettant d'atteindre à la fin d'un intervalle T une consigne de force mécanique C sans dépasser ni la tension maximale de la source de tension du moteur, ni le courant maximum pour lequel a été dimensionné l'onduleur, et d'un vecteur propre d'état de consigne $\vec{\Psi}_c$ du moteur représentatif du courant de consigne $\vec{I}_c$ et du vecteur flux des aimants prédit $\vec{\Phi}_P$ dans le repère rotorique tournant initial $(d_0,q_0)$ en fin de période T,
- un module de calcul d'un vecteur de tension $\vec{V}$ à appliquer continûment pendant l'intervalle T dans le repère statorique fixe $(\alpha,\beta)$ pour obtenir à l'expiration de cet intervalle T un courant égal au courant de consigne $\vec{I}_c$, établi par le module d'établissement, le vecteur de tension $\vec{V}$ étant calculé en fonction du vecteur propre d'état de consigne $\vec{\Psi}_c$ établi par le module d'établissement et en fonction d'un vecteur propre d'état initial $\vec{\Psi}_0$ du moteur, représentatif du vecteur de courant statorique $\vec{I}$ et du vecteur flux des aimants $\vec{\Phi}_a$ dans le repère rotorique tournant initial $(d_0,q_0)$ en début de période T, calculé préalablement par le module de calcul.

L'invention a également pour objet un véhicule électrique comportant :

- au moins un moteur de traction du véhicule électrique,
- un onduleur commandable comportant des interrupteurs électroniques de puissance propre à faire varier la tension du moteur de traction, et donc son courant et par suite son couple,
- des capteurs ou des estimateurs propres à mesurer ou à estimer l'intensité des courants du moteur ainsi que la position du flux des aimants permanents, et
- une unité de commande selon l'invention pour produire les signaux aptes à mettre en conduction ou à bloquer les interrupteurs électroniques de puissance de l'onduleur permettant de faire varier la tension sur le moteur.

L'invention sera mieux comprise à la lecture de la description qui va suivre, donnée uniquement à titre d'exemple non limitatif et faite en se référant aux dessins sur lesquels :

- la figure 1 est un schéma électrotechnique équivalent d'un moteur synchrone à aimants permanents enterrés,
- la figure 2 définit un repère initial et un repère de consigne utilisé lors de la mise en oeuvre du procédé de commande à réponse pile,
- la figure 3 représente schématiquement l'architecture d'un système de commande d'un moteur synchrone à aimants permanents enterrés,
- la figure 4 est un organigramme d'un procédé de commande à réponse pile mis en oeuvre dans le système de la figure 3.

Dans ces figures, les mêmes références sont utilisées pour désigner les mêmes éléments. Dans la suite de cette description, les caractéristiques et fonctions bien connues de l'homme du métier ne sont pas décrites en détail. En particulier, les méthodes mathématiques classiques, notamment de calcul matriciel, seront simplement citées puisque largement connues.

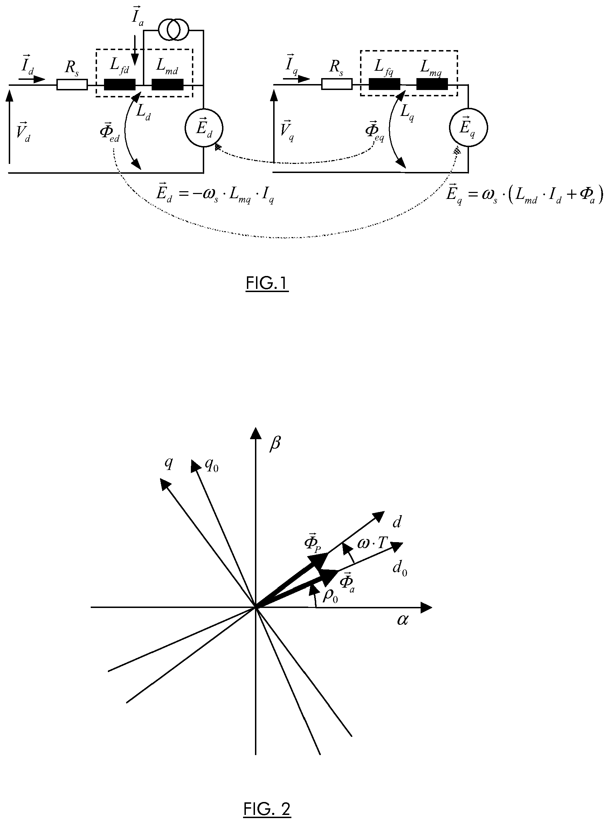

La figure 1 est un schéma électrotechnique équivalent d'un moteur synchrone à aimants permanents rotoriques enterrés. Ce type de moteur est à pôles saillants, du fait des aimants enterrés dans la tôle magnétique du rotor. Comme les pôles saillants dissymétrisent l'inductance statorique en fonction de la position du rotor, l'inductance magnétisante selon l'axe d - axe du flux rotorique des aimants permanents, est différente de l'inductance magnétisante selon l'axe q en quadrature directe. Si la saillance est directe, l'inductance magnétisante selon l'axe d est supérieure à l'inductance magnétisante selon l'axe q ; elle est inférieure si la saillance est inverse. Cette particularité impose que le modèle du moteur soit établi relativement à la position du rotor.

Il n'existe donc pas un schéma vectoriel équivalent unique, mais deux schémas pour représenter le fonctionnement électrique dans les deux axes d et q, comme cela est représenté à la figure 1 dans laquelle :

$R_s$ est la résistance statorique

$L_d$ est l'inductance statorique selon la direction du champ magnétique des aimants. Cette inductance se compose d'une inductance de fuite $L_{fd}$ et d'une inductance magnétisante : $L_{md}$, et $L_d = L_{fd} + L_{md}$.

$Lq$ est l'inductance statorique en quadrature avec la direction du champ magnétique des aimants. Cette inductance se compose d'une inductance de fuite $L_{fq}$ et d'une inductance magnétisante $L_{mq}$ : $L_q = L_{fq} + L_{mq}$ .

$\vec{I_a}$ est le courant équivalent de magnétisation d'entrefer par les aimants permanents au rotor : $\vec{I_a} = \dfrac{\vec{\Phi_a}}{L_{md}}$

$\vec{\Phi_a}$ est le vecteur de Park du flux des aimants selon l'axe d.

$\vec{\Phi_e}$ est le vecteur de Park du flux d'entrefer, composé du vecteur flux des aimants et du vecteur flux de l'inductance magnétisante. Ce dernier dépend du courant statorique. Ce vecteur flux projeté sur les axes $(d,q)$ donne deux composantes $\vec{\Phi_{ed}}$ et $\vec{\Phi_{eq}}$ de modules différents.

$\vec{V}$ et $\vec{I}$ sont les vecteurs de Park de tension et de courant statorique.

$\vec{E_d}$ et $\vec{E_q}$ sont les forces contre-électromotrices créées par les courants statoriques et par les aimants au rotor, dans les axes $q$ et $d$ respectivement :

$$\vec{E_d} = -\omega_s \cdot L_{mq} \cdot I_q \quad \text{et} \quad \vec{E_q} = \omega_s \cdot \left( L_{md} \cdot I_d + \Phi_a \right)$$

$\omega_s$ est la pulsation statorique du moteur.

On définit la vitesse angulaire du moteur $\omega$, comme la vitesse angulaire mécanique de l'arbre du moteur $\Omega$ multipliée par le nombre de paires de pôles du moteur $N_p$ , soit :

$$\omega = N_p \cdot \Omega$$

En instantané, la vitesse angulaire $\omega$ est différente de la pulsation électrique statorique $\omega_s$, mais en régime établi et en valeur moyenne, elles sont identiques dans le cas d'un moteur synchrone. Par la suite, $\omega_s$ sera donc remplacé par $\omega$ pour simplifier la description du procédé.

Le couple électromagnétique du moteur à aimants enterrés est connu par la relation suivante :

$$C = N_p \cdot \left[ \left( L_{md} - L_{mq} \right) \cdot I_d + \left\| \vec{\Phi_a} \right\| \right] \cdot I_q$$

Afin de décrire un exemple concret de réalisation (partie II), d'un système et d'un procédé de commande à réponse pile d'un moteur synchrone à aimants permanents enterrés, la théorie mathématique ayant permis de développer ce système et ce procédé va être présenté en partie I. Les notations introduites précédemment sont utilisées dans la suite de la description.

**Partie I : Mise en équation de la commande à réponse pile dans le cas d'un moteur synchrone à aimants permanents enterrés**

Pour décrire mathématiquement le moteur, plusieurs choix sont possibles, en terme de repère et de grandeurs physiques. L'objectif du modèle est d'être le plus simple possible dans sa formulation.

Les équations électrotechniques du moteur synchrone à aimants permanents enterrés ont la forme différentielle suivante par rapport au stator dans le repère fixe statorique ($\alpha$, $\beta$) :

$$\vec{V} = R_s \cdot \vec{I} + \vec{L}_f \cdot \frac{d\vec{I}}{dt} + \frac{d\vec{\Phi}_e}{dt}$$

$$\vec{\Phi}_e = \vec{L}_m \cdot \vec{I} + \vec{\Phi}_a$$

Du fait que l'anisotropie du rotor impose des inductances statoriques différentes selon les axes du repère tournant rotorique (d, q), il semble préférable de conserver ces axes pour exprimer simplement le modèle du moteur.

En ce qui concerne les variables permettant de décrire l'état du moteur, dites variables d'état, de nombreux choix sont possibles. Du fait que le courant statorique $\vec{I}$ est mesurable et peut servir directement à l'observation du flux, on peut retenir cette variable d'état. Le choix de la deuxième variable d'état peut être le flux des aimants $\vec{\Phi}_a$ ou le flux d'entrefer $\vec{\Phi}_e$. Ces deux variables permettent d'exprimer le couple. Avec le flux des aimants $\vec{\Phi}_a$, la relation classique sépare le couple réluctant du couple lié aux aimants :

$$C = N_p \cdot \left[ \left( L_{md} - L_{mq} \right) \cdot I_d \cdot I_q + \vec{\Phi}_a \wedge \vec{I} \right]$$

Avec le flux d'entrefer $\vec{\Phi}_e$, la relation se simplifie :

$$C = N_p \cdot \vec{\Phi}_e \wedge \vec{I}$$

Le choix du courant statorique $\vec{I}$ et du flux rotorique d'entrefer $\vec{\Phi}_e$ comme variables d'état dans le repère tournant rotorique (d, q), semble être plus adapté du fait qu'il conduit au couple sans introduire le produit $I_d$ . Iq dans le calcul du couple.

Cependant, l'anisotropie spatiale créée par le flux des aimants rend plus simple l'écriture des équations différentielles dans le repère tournant rotorique (d, q) du flux des aimants $\vec{\Phi}_a$. Les variables d'état choisies seront donc le courant statorique $\vec{I}$ et le flux des aimants $\vec{\Phi}_a$. Le système d'équations d'états différentielles avec ce choix devient :

$$\dot{I}_d = \frac{dI_d}{dt} = -\frac{R_s}{L_d} \cdot I_d + \omega \cdot \frac{L_{mq}}{L_d} \cdot I_q + \omega \cdot \frac{1}{L_d} \cdot \Phi_{aq} + \frac{1}{L_d} \cdot V_d$$

$$\dot{I}_q = \frac{dI_q}{dt} = -\omega \cdot \frac{L_{md}}{L_q} \cdot I_d - \frac{R_s}{L_q} \cdot I_q - \omega \cdot \frac{1}{L_q} \cdot \Phi_{ad} + \frac{1}{L_q} \cdot V_q$$

$$\dot{\Phi}_{ad} = \frac{d\Phi_{ad}}{dt} = -\omega \cdot \Phi_{aq}$$

$$\dot{\Phi}_{aq} = \frac{d\Phi_{aq}}{dt} = \omega \cdot \Phi_{ad}$$

Les deux dernières relations permettent de noter que le flux des aimants $\vec{\Phi}_a$ au rotor n'évolue que par la rotation du rotor du moteur et qu'il ne dépend pas de la tension de commande $\vec{V}$.

Le système des équations d'état continues se déduit immédiatement des équations différentielles précédentes à l'instant $t_n$ :

$$\begin{bmatrix} \dot{I}_d \\ \dot{I}_q \\ \dot{\Phi}_{ad} \\ \dot{\Phi}_{aq} \end{bmatrix} = \begin{bmatrix} -\dfrac{R_s}{L_d} & \omega \cdot \dfrac{L_{mq}}{L_d} & 0 & \omega \cdot \dfrac{1}{L_d} \\ -\omega \cdot \dfrac{L_{md}}{L_q} & -\dfrac{R_s}{L_q} & -\omega \dfrac{1}{L_q} & 0 \\ 0 & 0 & 0 & -\omega \\ 0 & 0 & \omega & 0 \end{bmatrix} \cdot \begin{bmatrix} I_d \\ I_q \\ \Phi_{ad} \\ \Phi_{aq} \end{bmatrix} + \begin{bmatrix} \dfrac{1}{L_d} & 0 \\ 0 & \dfrac{1}{L_q} \\ 0 & 0 \\ 0 & 0 \end{bmatrix} \cdot \begin{bmatrix} V_d \\ V_q \end{bmatrix}$$

Ce système peut également s'écrire :

$$\dot{\vec{X}} = A \cdot \vec{X} + B \cdot \vec{V} \qquad [1]$$

où

$\vec{X}$ est le vecteur d'état du moteur (vecteur de dimension 4), formé du vecteur de courant statorique $\vec{I}$ et du vecteur de flux des aimants $\vec{\Phi}_a$,
A est la matrice d'évolution du moteur (de dimension 4x4),
B est la matrice de commande du moteur (de dimension 4x2) et
$\vec{V}$ est le vecteur de tension appliqué au moteur (de dimension 2).

Les valeurs propres de la matrice d'évolution A caractérisent, en terme de courant statorique et de flux des aimants, l'évolution dans le temps du moteur ou l'évolution libre du moteur, c'est-à-dire l'évolution du moteur en court-circuit.

Ce système d'équations est continu et n'est donc pas exploitable simplement en l'état par des calculateurs électroniques, puisque les calculs nécessitent une intégration temporelle qui peut demander une période de calcul assez longue. Le système d'équations continu doit donc être discrétisé sur une période T au moins supérieure à la durée du calcul. Les équations d'état discrètes entre les instants $t_n$ et $t_n+T$ se déduisent des équations d'état continues par intégration entre ces deux bornes temporelles, en supposant la tension constante entre ces deux instants. Avec les notations classiques l'équation [1] devient :

$$\vec{X}(t_{n+T}) = F \cdot \vec{X}(t_n) + G \cdot \vec{V}_{t_n \to t_n+T} \qquad [2]$$

où $\vec{V}$ est la tension moyenne appliquée de $t_n$ à $t_n+T$ et où :
$F = e^{A \cdot T}$ , est la matrice d'évolution discrétisée ou encore matrice de transition et
$G = A^{-1} \cdot (e^{A \cdot T} - I_4) \cdot B$ , est la matrice de commande discrétisée.

La matrice d'évolution discrète : F, décrit le comportement du moteur en court-circuit et la matrice de commande discrète : G, décrit la variation du comportement du moteur sous l'influence de la tension de commande par rapport à l'évolution en court circuit.

Pour éviter d'approximer le calcul de l'exponentielle de matrice $F = e^{A \cdot T}$ par un développement en série limité ou par d'autres méthodes d'approximation connues, mais aussi pour obtenir une expression analytique exacte facilement implantable dans un calculateur avec une durée de calcul limité, la demanderesse a imaginé utiliser l'égalité mathématique connue suivante :

$$e^{A \cdot T} = P \cdot e^{D \cdot T} \cdot P^{-1}$$

dans lequel D est la matrice diagonale de la matrice d'évolution A, P est la matrice de passage et $P^{-1}$ est la matrice de passage inversée.

L'équation d'état discrétisée [2] devient :

$$\vec{X}\left(t_n + T\right) = P \cdot e^{D.T} \cdot P^{-1} \cdot \vec{X}(t_n) + A^{-1} \cdot (P \cdot e^{D.T} \cdot P^{-1} - I_4) \cdot B \cdot \vec{V}_{t_n \to t_n + T} \quad [3]$$

Bien qu'a priori plus complexe, l'équation d'état discrétisée [3] permet le calcul analytique exact de l'exponentielle de matrice. En effet, le terme $e^{D.T}$ est bien une exponentielle de matrice, mais D étant une matrice diagonale, l'exponentielle d'une matrice diagonale est également une matrice diagonale dont les valeurs de la diagonale sont les exponentielles des scalaires de la diagonale de la matrice D, et donc les exponentielles scalaires des valeurs propres de la matrice d'origine A.

a) expression analytique de D et $e^{DT}$

Les matrices A et B étant connues analytiquement, la première étape consiste à calculer analytiquement les matrices D et $e^{DT}$. La suite logique de la démarche tenue par la demanderesse est donc de calculer par les méthodes mathématiques classiques les valeurs propres $\mu_i$ pour $i \in \{1;2;3;4\}$, de la matrice d'évolution A par l'équation caractéristique de A qui est l'égalisation à 0 du déterminant de la matrice $(\mu.I_4 - A)$, pour pouvoir calculer la matrice diagonalisée D :

$$\det (\mu.I_4 - A) = 0, I_4 \text{ étant la matrice unité de dimension 4.}$$

Pour des raisons de lisibilité, les étapes de calculs intermédiaires ne sont pas indiquées, l'homme du métier pouvant reconstituer ces calculs sans difficulté.
Les valeurs propres $\{\mu_1, \mu_2, \mu_3, \mu_4\}$ sont exprimées par les équations suivantes

$$\mu_1 = \frac{-R_s \cdot (L_d + L_q) + \sqrt{R_s^2 \cdot (L_d - L_q)^2 - 4 \cdot \omega^2 \cdot L_d \cdot L_q \cdot L_{md} \cdot L_{mq}}}{2 \cdot L_d \cdot L_q} \quad [4]$$

$$\mu_2 = \frac{-R_s \cdot (L_d + L_q) - \sqrt{R_s^2 \cdot (L_d - L_q)^2 - 4 \cdot \omega^2 \cdot L_d \cdot L_q \cdot L_{md} \cdot L_{mq}}}{2 \cdot L_d \cdot L_q} \quad [5]$$

$$\mu_3 = -i \cdot \omega \quad [6]$$

$$\mu_4 = i \cdot \omega \quad [7]$$

Les valeurs propres $\mu_1$ et $\mu_2$ expriment l'évolution du courant statorique piégé dans les inductances du moteur et sont homogènes à deux constantes de temps.
Les valeurs propres $\mu_3$ et $\mu_4$ indiquent simplement que le rotor tourne à la vitesse angulaire $\omega$.
La matrice d'évolution diagonalisée D s'écrit avec les valeurs propres sur la diagonale :

$$D = \begin{bmatrix} \mu_1 & 0 & 0 & 0 \\ 0 & \mu_2 & 0 & 0 \\ 0 & 0 & \mu_3 & 0 \\ 0 & 0 & 0 & \mu_4 \end{bmatrix}$$

par suite $e^{D.T}$ s'écrit simplement :

$$e^{D \cdot T} = \begin{bmatrix} e^{\mu_1 \cdot T} & 0 & 0 & 0 \\ 0 & e^{\mu_2 \cdot T} & 0 & 0 \\ 0 & 0 & e^{\mu_3 \cdot T} & 0 \\ 0 & 0 & 0 & e^{\mu_4 \cdot T} \end{bmatrix}$$

b) expression analytique de P et P$^{-1}$

Dans une deuxième étape, la matrice de passage P est calculée selon une méthode mathématique bien connue à partir des quatre vecteurs propres $\{\vec{\Pi}_1 ; \vec{\Pi}_2 ; \vec{\Pi}_3 ; \vec{\Pi}_4\}$ de dimension 4, eux-mêmes choisis parmi une infinité de solutions affines, des quatre systèmes de quatre équations matricielles :

$$(\mu_i . I_4 - A) \cdot \vec{\Pi}_i = \vec{0} \text{ , avec } i \in \{1; 2; 3; 4\}$$

$$P = \begin{bmatrix} \vec{\Pi}_1 & \vec{\Pi}_2 & \vec{\Pi}_3 & \vec{\Pi}_4 \end{bmatrix}$$

$I_4$ étant la matrice unité et $\vec{\Pi}_i$ représentant les quatre vecteurs propres de coordonnées :

$$\vec{\Pi}_i = \begin{bmatrix} \pi_{1i} \\ \pi_{2i} \\ \pi_{3i} \\ \pi_{4i} \end{bmatrix}$$

Il y a donc seize coordonnées de quatre vecteurs propres à calculer pour exprimer complètement la matrice de passage P. Cette matrice peut facilement être calculée sous la forme la suivante :

$$P = \begin{bmatrix} \dfrac{-L_q \cdot \mu_1 + R_s}{\omega \cdot L_{md}} & 1 & \mu_3 \cdot (L_q \cdot \mu_3 + R_s) + \omega^2 \cdot L_{mq} & \mu_4 \cdot (L_q \cdot \mu_4 + R_s) + \omega^2 \cdot L_{mq} \\ 1 & \dfrac{L_d \cdot \mu_2 + R_s}{\omega \cdot L_{mq}} & \omega \cdot (L_d \cdot \mu_3 + R_s) - \mu_3 \cdot \omega \cdot L_{md} & \omega \cdot (L_d \cdot \mu_4 + R_s) - \mu_4 \cdot \omega \cdot L_{md} \\ 0 & 0 & -L_d \cdot L_q \cdot (\mu_3 - \mu_1) \cdot (\mu_3 - \mu_2) & -L_d \cdot L_q \cdot (\mu_4 - \mu_1) \cdot (\mu_4 - \mu_2) \\ 0 & 0 & L_d \cdot L_q \cdot \dfrac{\mu_3 \cdot (\mu_3 - \mu_1) \cdot (\mu_3 - \mu_2)}{\omega} & L_d \cdot L_q \cdot \dfrac{\mu_4 \cdot (\mu_4 - \mu_1) \cdot (\mu_4 - \mu_2)}{\omega} \end{bmatrix}$$

Toujours avec les méthodes mathématiques connues, l'inverse de la matrice de passage P$^{-1}$ est déterminée comme suit :

$$P^{-1} = \begin{bmatrix} \dfrac{\omega \cdot L_{md}}{L_q \cdot (\mu_2 - \mu_1)} & \dfrac{L_q \cdot \mu_2 + R_s}{L_q \cdot (\mu_2 - \mu_1)} & \dfrac{\omega \cdot (\omega^2 \cdot L_{md} \cdot L_q - L_d \cdot \mu_1 \cdot (L_q \cdot \mu_2 + R_s))}{L_d \cdot L_q^2 \cdot (\mu_4 - \mu_1) \cdot (\mu_3 - \mu_1) \cdot (\mu_2 - \mu_1)} & \dfrac{\omega \cdot (\omega \cdot L_{md} \cdot L_q \cdot \mu_1 + \omega \cdot L_d \cdot (L_q \cdot \mu_2 + R_s))}{L_d \cdot L_q^2 \cdot (\mu_4 - \mu_1) \cdot (\mu_3 - \mu_1) \cdot (\mu_2 - \mu_1)} \\[2em] \dfrac{L_q \cdot \mu_2 + R_s}{L_q \cdot (\mu_2 - \mu_1)} & \dfrac{\omega \cdot L_{mq}}{L_d \cdot (\mu_2 - \mu_1)} & -\dfrac{\omega \cdot (\omega \cdot L_{mq} \cdot L_d \cdot \mu_2 + \omega \cdot L_q \cdot (L_d \cdot \mu_1 + R_s))}{L_d^2 \cdot L_q \cdot (\mu_4 - \mu_2) \cdot (\mu_3 - \mu_2) \cdot (\mu_2 - \mu_1)} & \dfrac{\omega \cdot (\omega^2 \cdot L_{mq} \cdot L_d - L_q \cdot \mu_2 \cdot (L_d \cdot \mu_1 + R_s))}{L_d^2 \cdot L_q \cdot (\mu_4 - \mu_2) \cdot (\mu_3 - \mu_2) \cdot (\mu_2 - \mu_1)} \\[2em] 0 & 0 & -\dfrac{\mu_4}{L_d \cdot L_q \cdot (\mu_4 - \mu_3) \cdot (\mu_3 - \mu_2) \cdot (\mu_3 - \mu_1)} & -\dfrac{\omega}{L_d \cdot L_q \cdot (\mu_4 - \mu_3) \cdot (\mu_3 - \mu_2) \cdot (\mu_3 - \mu_1)} \\[2em] 0 & 0 & \dfrac{\mu_3}{L_d \cdot L_q \cdot (\mu_4 - \mu_3) \cdot (\mu_4 - \mu_2) \cdot (\mu_4 - \mu_1)} & \dfrac{\omega}{L_d \cdot L_q \cdot (\mu_4 - \mu_3) \cdot (\mu_4 - \mu_2) \cdot (\mu_4 - \mu_1)} \end{bmatrix}$$

Pour simplifier le système d'équations d'état établi en [3], la demanderesse a alors eu l'idée de projeter les vecteurs d'état d'origine $\vec{X}$ dans le repère des vecteurs propres en multipliant à gauche l'équation matricielle [3] par l'inverse de la matrice de passage P$^{-1}$. Physiquement, cette multiplication se traduit par le fait que les vecteurs d'état sont exprimés dans le repère propre d'évolution libre du moteur. En d'autres termes, $\mathrm{P}^{-1}.\vec{\mathrm{X}}(t_n)$ est le vecteur d'état exprimé dans un nouveau repère caractérisant les directions de l'évolution libre du moteur.

En remarquant que $I_4 = P \cdot I_4 \cdot P^{-1}$, en factorisant P à gauche et $P^{-1}$ à droite dans le facteur du vecteur de tension $\vec{V}$, [3] devient:

$$\mathrm{P}^{-1} \cdot \vec{\mathrm{X}}(t_n + T) = e^{D.T} \cdot \mathrm{P}^{-1} \cdot \vec{\mathrm{X}}(t_n) + \mathrm{P}^{-1} \cdot \mathrm{A}^{-1} \cdot \mathrm{P} \cdot (e^{D.T} - \mathrm{I}_4) \cdot \mathrm{P}^{-1} \cdot \mathrm{B} \cdot \vec{V}$$

en remarquant de plus que : $P^{-1} \cdot A^{-1} \cdot P = D^{-1}$

L'équation précédente s'écrit :

$$\left[ \mathrm{P}^{-1} \cdot \vec{\mathrm{X}}(t_n + T) \right] = e^{D.T} \cdot \left[ \mathrm{P}^{-1} \cdot \vec{\mathrm{X}}(t_n) \right] + D^{-1} \cdot (e^{D.T} - \mathrm{I}_4) \cdot \mathrm{P}^{-1} \cdot \mathrm{B} \cdot \left[ \vec{V} \right] \qquad [8]$$

avec

$$D^{-1} = \begin{bmatrix} \dfrac{1}{\mu_1} & 0 & 0 & 0 \\[1.5em] 0 & \dfrac{1}{\mu_2} & 0 & 0 \\[1.5em] 0 & 0 & \dfrac{1}{\mu_3} & 0 \\[1.5em] 0 & 0 & 0 & \dfrac{1}{\mu_4} \end{bmatrix}$$

Les matrices P$^{-1}$, e$^{D \cdot T}$, D$^{-1}$, B et $\vec{\mathrm{X}}(t_n)$ sont connues et exprimées uniquement en fonction de caractéristiques physiques du moteur et de sa vitesse angulaire ω. Il est donc possible, à partir de l'équation [8] (équation d'état discrète projetée dans la base des vecteurs propres), de calculer exactement l'état ultérieur du moteur (ou « état prédit ») : $\vec{\mathrm{X}}(t_n + T)$ lorsqu'on lui applique un vecteur de tension $\vec{V}$.

Si on remplace l'état final prédit $\vec{\mathrm{X}}(t_n + T)$ par un état correspondant à une consigne, le calcul de la tension de commande se résume à calculer le vecteur de tension $\vec{V}$ à appliquer au moteur pour que l'état du moteur passe de l'état initial $\vec{\mathrm{X}}(t_n) = \vec{\mathrm{X}}_0$ à l'état final égal à l'état de consigne $\vec{\mathrm{X}}(t_n + T) = \vec{\mathrm{X}}_c$ et donc à inverser mathématiquement l'équation [8]. Par définition, l'instant initial est l'instant à partir duquel débute la période T de calcul.

L'état de consigne étant constitué d'un vecteur de courant statorique sur lequel la tension de commande agit et du vecteur du flux des aimants, qui évolue librement en fonction de la vitesse mécanique du rotor indépendamment de la tension de commande, on ne peut pas remplacer le vecteur flux des aimants par une consigne de flux. On remplacera donc le vecteur flux des aimants $\vec{\Phi}_a$ par sa prédiction d'évolution $\vec{\Phi}_P$ simplement calculée à partir de l'état initial, par la rotation des aimants, à la vitesse angulaire $\omega$, de l'angle $\omega \cdot T$ pendant le temps $T$.

La figure 2 montre les trois repères utilisés pour le calcul de la tension de commande. Le repère fixe statorique $(\alpha, \beta)$ est un repère orthonormé fixe par rapport au stator. Le repère du flux rotorique $(d,q)$ est un repère orthonormé fixe par rapport au rotor. Le repère du flux rotorique tourne par rapport au repère fixe statorique $(\alpha, \beta)$ à la vitesse angulaire $\omega$. Par définition, l'axe $d_0$ du repère $(d_0, q_0)$ est dirigé selon la direction du flux des aimants du rotor en début de période T de calcul. Par conséquent, le repère $(d_0, q_0)$ est appelé par la suite « repère tournant rotorique initial ». L'axe d du repère $(d, q)$ sur la figure 2 est dirigé selon la direction du flux des aimants du rotor en fin de période T de calcul. Le repère $(d, q)$ a tourné dans la période T d'un angle égal à la vitesse angulaire $\omega$ multiplié par la période T. Le repère formé par les axes $(d, q)$ est appelé le « repère tournant rotorique prédit ».

L'angle $\rho_0$ du repère tournant rotorique initial $(d_0, q_0)$ dans le repère fixe statorique $(\alpha, \beta)$ est l'argument du vecteur flux des aimants mesuré à l'instant initial ou encore la position angulaire du vecteur de flux des aimants dans le repère fixe:

$$\rho_0 = \arg(\vec{\Phi}_a)$$

Le repère tournant rotorique prédit $(d, q)$ est donc estimable par la relation angulaire déduite de la relation d'évolution-prédiction du flux:

$$\rho = \rho_0 + \omega \cdot T$$

Rappelons que pour exprimer plus facilement l'anisotropie du rotor des moteurs à aimants permanents enterrés, nous avons choisi d'écrire les équations d'état continues du moteur ainsi que les équations d'état discrétisées dans un repère tournant lié au flux des aimants. Il est donc possible d'exprimer l'état du moteur soit dans le repère initial $(d_0, q_0)$, soit dans le repère final $(d,q)$.

Pour calculer les vecteurs propres d'état dans le repère tournant rotorique à l'instant initial $(d_0, q_0)$, il faut d'abord exprimer complètement l'état du système en fonction du courant statorique et du flux des aimants :

- à l'instant initial $t_n$, $[P^{-1} \cdot \vec{X}_0]$ à partir du courant statorique et du flux mesurés dans le repère fixe statorique $(\alpha, \beta)$ au même instant,

- à l'instant final $t_n + T$, $[P^{-1} \cdot \vec{X}_c]$ à partir du courant de consigne calculé $\vec{I}_c$ et du flux des aimants prédit $\vec{\Phi}_P$ dans le repère tournant rotorique prédit $(d, q)$, pour définir précisément l'objectif d'état du moteur, encore appelé état de consigne du moteur, à l'instant de prédiction $t_n + T$ qui est l'instant final.

Une fois les vecteurs propres d'état initial et de consigne exprimés dans leurs repères respectifs différents, il faudra donc effectuer pour chacun un changement de repère pour les exprimer dans le repère tournant rotorique initial $(d_0, q_0)$.

Posons :

$$P^{-1} \cdot \begin{bmatrix} I_{d_0 c} \\ I_{q_0 c} \\ \Phi_{d_0 P} \\ \Phi_{q_0 P} \end{bmatrix} = \vec{\Psi}_c = \begin{bmatrix} \vec{\Psi}_{1c} \\ \vec{\Psi}_{2c} \end{bmatrix} \quad [9]$$

et

$$P^{-1} \cdot \begin{bmatrix} I_{d_0 0} \\ I_{q_0 0} \\ \Phi_{d_0 0} \\ \Phi_{q_0 0} \end{bmatrix} = \vec{\Psi}_0 = \begin{bmatrix} \vec{\Psi}_{10} \\ \vec{\Psi}_{20} \end{bmatrix} \ [10]$$

$\vec{\Psi}_c$ étant le vecteur d'état propre de consigne et $\vec{\Psi}_0$ tant le vecteur d'état propre initial. L'équation [8] s'écrit donc après développement :

$$P^{-1} \cdot \begin{bmatrix} I_{d_0 c} \\ I_{q_0 c} \\ \Phi_{d_0 c} \\ \Phi_{q_0 c} \end{bmatrix}_{(t_n + T)} = e^{D.T} \cdot P^{-1} \cdot \begin{bmatrix} I_{d_0 0} \\ I_{q_0 0} \\ \Phi_{d_0 0} \\ \Phi_{q_0 0} \end{bmatrix}_{(t_n)} + D^{-1} \cdot (e^{D.T} - I_4) \cdot P^{-1} \cdot B \cdot \begin{bmatrix} \vec{V} \end{bmatrix} \qquad [11]$$

Pour pouvoir calculer le vecteur de tension $\vec{V}$, il reste à exprimer analytiquement les vecteurs d'état propres de consigne et initial puisque les autres composantes de l'équation [11] sont connues.

c) Expression du vecteur propre d'état de consigne $\vec{\Psi}_c$

Comme l'équation [9] le montre, le vecteur propre d'état de consigne $\vec{\Psi}_c$ dépend du courant de consigne $\vec{I}_c$, et du flux des aimants prédit $\vec{\Psi}_P$.

Le choix du courant de consigne $\vec{I}_c = \begin{bmatrix} I_{dc} \\ I_{qc} \end{bmatrix}$ doit répondre à trois objectifs :

- atteindre le couple instantané de consigne en fin de période T,
- tenir compte de la limite de tension statorique correspondant à la tension continue d'alimentation de l'onduleur,
- et respecter les limitations instantanées de courant de l'onduleur.

De l'équation du couple électromagnétique du moteur, on déduit :

$$I_{qc} = \frac{C}{N_p} \cdot \frac{1}{(L_{md} - L_{mq}) \cdot I_{dc} + \left\| \vec{\Phi}_a \right\|}$$

Pour un couple de consigne C et pour une tension limite donnée, on choisit un couple de valeur $(I_{dc}, I_{qc})$ définissant les coordonnées du vecteur de courant de consigne dans le repère rotorique tournant prédit (d,q).

Les deux coordonnées du courant de consigne dans le repère (d,q) à l'instant $t_n + T$ représentent deux degrés de liberté, ce qui signifie que les trois objectifs peuvent ne pas pouvoir être atteints en même temps. En particulier, si la limite de courant est atteinte, le couple de consigne ne pourra pas être atteint. Une stratégie de commande devra donc être définie en fixant une priorité aux différents objectifs, selon le dimensionnement du moteur.

Ce choix est fonction de la stratégie de commande retenue par l'utilisateur et des limitations en tension et en courant du système délivrant la tension d'alimentation du moteur. L'homme de l'art connaît les nombreux choix possibles de stratégies, telle que celle définie par exemple dans N. Bianchi, S. Bolognani-« Design considerations about synchronous motor drives for flux-weakening applications », p185-190, EPE Chapter Symposium EPFL, Lausanne, Suisse 19-20 Octobre 1994 ou bien dans « On line minimum copper loss control of interior permanent-magnet synchronous machine for automotive applications », brevet US 2006/0284582 de Yu-Seok Jeong and al.

Le courant de consigne est calculé dans le repère tournant rotorique prédit (d,q) et doit être exprimé dans le repère rotorique tournant initial $(d_0, q_0)$, au moyen de la relation suivante de changement d'axe :

$$\begin{bmatrix} I_{d_0c} \\ I_{q_0c} \end{bmatrix} = e^{i \cdot \omega \cdot T} \cdot \begin{bmatrix} I_{dc} \\ I_{qc} \end{bmatrix} \quad [12]$$

Comme dit précédemment, dans le cas des moteurs synchrones à aimants permanents enterrés, il n'est pas possible d'imposer une consigne de flux des aimants puisque le module du flux correspond à celui des aimants et n'est pas commandable. Il s'agit donc d'une simple prédiction assimilable à une rotation, à partir des coordonnées du vecteur du flux rotorique dans le repère $(d_0, q_0)$ :

$$\begin{bmatrix} \left\| \vec{\Phi}_a \right\| \\ 0 \end{bmatrix}$$

Les coordonnées du vecteur du flux des aimants dans le repère tournant rotorique prédit (d,q) se déduisent donc simplement de la mesure en début de période T du module du flux des aimants $\|\vec{\Phi}_a\|$ par la relation :

$$\begin{bmatrix} \Phi_{d_0P} \\ \Phi_{q_0P} \end{bmatrix} = e^{i \cdot \omega \cdot T} \cdot \begin{bmatrix} \left\| \vec{\Phi}_a \right\| \\ 0 \end{bmatrix} \quad [13]$$

En déterminant un courant de consigne $\vec{I}_c$, et en mesurant le module du flux des aimants $\|\vec{\Phi}_a\|$ à l'instant initial, il devient donc possible par [12] et [13] d'exprimer analytiquement le vecteur propre d'état de consigne $\vec{\Psi}_c$.

d) Expression du vecteur propre d'état initial $\vec{\Psi}_c$

Les mesures des courants statoriques ainsi que la mesure du flux des aimants avec le capteur de position, ou bien l'estimation du flux des aimants avec un observateur, permettent de connaître les deux vecteurs composant le vecteur propre d'état initial dans le repère fixe statorique $(\alpha, \beta)$ du stator :

$$\vec{I}_0 = I_{\alpha 0} + i \cdot I_{\beta 0}$$

$$\vec{\Phi}_a = \Phi_{\alpha 0} + i \cdot \Phi_{\beta 0}$$

Pour exprimer le vecteur propre d'état initial $\vec{\Psi}_0$ dans l'équation [11], il faut effectuer un changement de repère pour passer les coordonnées mesurées dans le repère fixe statorique $(\alpha, \beta)$, dans le repère tournant rotorique initial $(d_0, q_0)$, par la relation de changement d'axes suivante :

$$\begin{bmatrix} I_{d_0 0} \\ I_{q_0 0} \\ \Phi_{d_0 0} \\ \Phi_{q_0 0} \end{bmatrix} = \begin{bmatrix} I_{\alpha 0} \\ I_{\beta 0} \\ \Phi_{\alpha 0} \\ \Phi_{\beta 0} \end{bmatrix} \cdot e^{-i \cdot \rho_0}$$

avec $\Phi_{d_0 0} = \left\| \vec{\Phi}_a \right\|$ et $\Phi_{q_0 0} = 0$ par définition du repère $(d_0, q_0)$.

e) expression du vecteur de tension $\vec{V}$

Les matrices P, P$^{-1}$, e$^{DT}$, B étant exprimées analytiquement, il reste à exprimer analytiquement les vecteurs propres d'état de consigne et initial, définis par les relations [9] et [10] en multipliant les relations établies précédemment par la matrice inversée P$^{-1}$.

En posant :

$$\zeta_1 = -\frac{L_d \cdot \mu_1 + R_s}{\omega \cdot L_{md}}$$

$$\zeta_2 = -\frac{L_d \cdot \mu_2 + R_s}{\omega \cdot L_{md}}$$

$$\xi_{d1} = \frac{\omega \cdot (\omega - \mu_1 \cdot \zeta_1)}{(\mu_4 - \mu_1) \cdot (\mu_3 - \mu_1)}$$

$$\xi_{q1} = \frac{\omega \cdot (\mu_1 + \omega \cdot \zeta_1)}{(\mu_4 - \mu_1) \cdot (\mu_3 - \mu_1)} \qquad [14]$$

$$\xi_{d2} = \frac{\omega \cdot (\omega - \mu_2 \cdot \zeta_2)}{(\mu_4 - \mu_2) \cdot (\mu_3 - \mu_2)}$$

$$\xi_{q2} = \frac{\omega \cdot (\mu_2 + \omega \cdot \zeta_2)}{(\mu_4 - \mu_2) \cdot (\mu_3 - \mu_2)}$$

$$e_1 = \frac{e^{\mu_1 \cdot T} - 1}{\mu_1}$$

$$e_2 = \frac{e^{\mu_2 \cdot T} - 1}{\mu_2}$$

les deux coordonnées des vecteurs propres d'état de consigne de l'équation [9] deviennent :

$$\begin{bmatrix} \vec{\Psi}_{1c} \\ \vec{\Psi}_{2c} \end{bmatrix}_{(d_0,q_0)} = \begin{bmatrix} L_d \cdot I_{d_0c} + \zeta_1 \cdot L_q \cdot I_{q_0c} + \xi_{d1} \cdot \Phi_{d_0P} + \xi_{q1} \cdot \Phi_{q_0P} \\ L_d \cdot I_{d_0c} + \zeta_2 \cdot L_q \cdot I_{q_0c} + \xi_{d2} \cdot \Phi_{d_0P} + \xi_{q2} \cdot \Phi_{q_0P} \end{bmatrix} \quad [15]$$

avec, en rappel :

$$\begin{bmatrix} I_{d_0c} \\ I_{q_0c} \end{bmatrix} = \vec{I}_{c_{(d_0,q_0)}}$$ : Vecteur de courant de consigne en fin de période T exprimé par ses coordonnées dans le repère tournant rotorique initial ($d_0,q_0$)

$$\begin{bmatrix} \Phi_{d_0P} \\ \Phi_{q_0P} \end{bmatrix} = \vec{\Phi}_{P_{(d_0,q_0)}}$$ : Vecteur de flux des aimants prédit en fin de période *T* exprimé par ses coordonnées dans le repère tournant rotorique initial ($d_0,q_0$)

et les deux coordonnées des vecteurs propres d'état initial de l'équation [10] deviennent :

$$\begin{bmatrix} \vec{\Psi}_{10} \\ \vec{\Psi}_{20} \end{bmatrix}_{(d_0,q_0)} = \begin{bmatrix} L_d \cdot I_{d_00} + \zeta_1 \cdot L_q \cdot I_{q_00} + \xi_{d1} \cdot \left\| \vec{\Phi}_a \right\| \\ L_d \cdot I_{d_00} + \zeta_2 \cdot L_q \cdot I_{q_00} + \xi_{d2} \cdot \left\| \vec{\Phi}_a \right\| \end{bmatrix} \qquad [16]$$

avec, en rappel :

$$\begin{bmatrix} \left\| \vec{\Phi}_a \right\| \\ 0 \end{bmatrix} = \vec{\Phi}_{a_{(d_0,q_0)}}$$ : Vecteur de flux des aimants mesuré en début de période $T$ exprimé par ses coordonnées dans le repère tournant rotorique initial ($d_0,q_0$). C'est le vecteur flux des aimants mesuré en début de période qui définit le repère tournant rotorique initial ($d_0,q_0$).

$$\begin{bmatrix} I_{d_00} \\ I_{q_00} \end{bmatrix} = \vec{I}_{0_{(d_0,q_0)}}$$ : Vecteur de courant mesuré en début de période T exprimé par ses coordonnées dans le repère tournant rotorique initial ($d_0,q_0$), donc dans le repère défini par le flux à l'origine.

Pour une vitesse angulaire donnée, les vecteurs d'état initial $\vec{\Psi}_0$ et de consigne $\vec{\Psi}_c$ sont complètement définis par la mesure des courants statoriques $\vec{I}_0$, la mesure ou l'estimation du flux des aimants $\vec{\Phi}_a$ à l'instant initial, par les paramètres physiques du moteur et par la consigne de courant $\vec{I}_c$.

En remplaçant dans [11] les vecteurs d'état projetés dans le repère des vecteurs propres, par les relations [15] et [16] et en résolvant le système de deux équations à deux inconnues, le système des équations d'état devient dans le repère tournant rotorique initial ($d_0,q_0$):

$$\vec{\Psi}_{1c} = e^{\mu_1 \cdot T} \cdot \vec{\Psi}_{10} + e_1 \cdot \left[ V_{d_0} + \xi_1 \cdot V_{q_0} \right]$$
$$\vec{\Psi}_{2c} = e^{\mu_2 \cdot T} \cdot \vec{\Psi}_{20} + e_2 \cdot \left[ V_{d_0} + \xi_2 \cdot V_{q_0} \right] \qquad [17]$$

Le calcul du vecteur de commande $\vec{V}$ dans ($d_0,q_0$) est réalisé en éliminant tour à tour l'une de ses deux coordonnées entre les deux équations de [17]. On obtient alors :

$$\boxed{V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}} \qquad [18]$$

et

$$\boxed{V_{q_0} = -\frac{e_2 \cdot \left[ \vec{\Psi}_{1c} - \vec{\Psi}_{10} \cdot e^{\mu_1 \cdot T} \right] - e_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}} \qquad [19]$$

Le vecteur de tension $\vec{V}$ de commande à appliquer est alors complètement défini par les caractéristiques du moteur, par la consigne de courant $\vec{I}_c$, par les mesures, en début de période T, des courants statoriques $\vec{I}_0$ et du flux des aimants $\vec{\Phi}_a$

Le vecteur de tension $\vec{V}$ peut donc être calculé par ses coordonnées dans le repère tournant initial ($d_0,q_0$) par [18] et [19]. Il est appliqué sur le stator du moteur par l'onduleur de tension dans le repère fixe ($\alpha,\beta$). Pour transmettre cette information à la commande de l'onduleur, il est donc nécessaire de changer de repère :

$$V_\alpha + i \cdot V_\beta = \left( V_{d_0} + i \cdot V_{q_0} \right) \cdot e^{i \cdot \rho_0}$$

Il est donc possible de calculer sur une période T, une consigne de tension à appliquer à un onduleur et d'atteindre exactement à la fin de cette période l'état de consigne puisque les équations de commande définissent intégralement, analytiquement et sans aucune perte d'information l'état du moteur. Les valeurs propres et les variables intermédiaires sont simples à calculer et ne nécessitent pas de moyen de calcul particulier ni de durée de calcul trop longue devant la constante statorique du moteur, ce qui permet de piloter de manière très réactive le moteur. Le choix d'un état de consigne est réalisé en tenant compte de la consigne de couple envoyée par le conducteur au calculateur, des limites de tension de la caténaire et des limites de courant de l'onduleur, assurant ainsi la sécurité des composants de la chaîne de traction.

**Partie II : Exemple concret de réalisation**

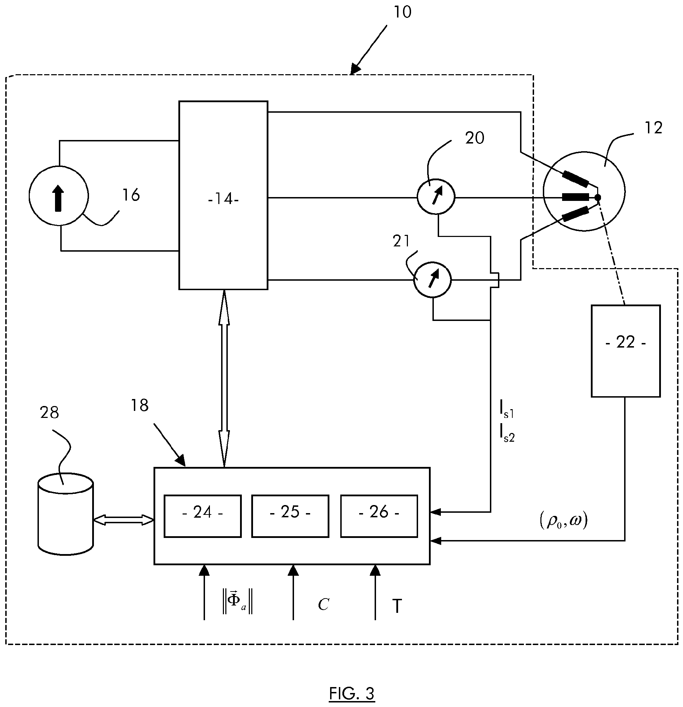

La figure 3 représente un système 10 de commande à réponse pile d'une machine électrique tournante 12. Ici, la machine est un moteur électrique rotatif synchrone à aimants permanents enterrés, équipé d'un rotor à aimants permanents et d'un stator.

Le système 10 comprend un onduleur de tension 14 commandable par une Modulation de Largeurs d'Impulsions (MLI) propre à générer une tension d'alimentation moyenne sur chacune des phases du moteur 12, et donc un courant dans ses phases. Cet onduleur 14 transforme une source 16 de tension continue en une tension triphasée d'alimentation du moteur 12. Le moteur 12 fonctionne en traction et, en alternance, en générateur de tension triphasée, par exemple, lorsque le véhicule freine électriquement.

La constante de temps statorique $\tau$ du moteur 12 est généralement comprise entre 4 ms et 100 ms. La constante de temps statorique d'un moteur électrique est définie par la relation suivante :

$$\tau = \frac{L_s}{R_s}$$

où :

- $L_s$ est l'inductance statorique du moteur électrique, et
- $R_s$ est la résistance statorique du moteur électrique.

On définit donc deux constantes de temps pour ce type de moteur en remplaçant successivement $L_s$ par $L_d$ ou Lq. Par la suite par constante de temps on entendra la constante de temps la plus petite des deux constantes de temps ainsi définies.

Le système de commande 10 comprend également une unité 18 de commande de l'onduleur 14 , des capteurs d'intensité 20 et 21, et du capteur de position angulaire 22 du rotor du moteur 12. Toutefois, la mesure de la position mécanique du rotor peut être remplacée par un estimateur de cette position de type KALMAN par exemple. Chacun des capteurs 20 et 21 est apte à mesurer l'intensité du courant statorique dans une phase du moteur 12. La mesure de la position angulaire $\rho_0$ du moteur 22 permet, par dérivation temporelle, de calculer la vitesse angulaire $\omega$ du moteur.

Ici, l'unité 18 est, par exemple, formée d'un calculateur 24 propre à établir, à partir de mesures réalisées au niveau des capteurs 20, 21 et 22, un vecteur moyen de tension $\vec{V}$ de commande sur un intervalle T.

L'unité 18 est également propre à recevoir la consigne de couple C. A partir de ces mesures, et de la consigne C, l'unité 18 est capable de calculer le vecteur de tension $\vec{V}$ à appliquer à l'onduleur 14 pour que le moteur 12 atteigne, à l'expiration de l'intervalle T choisi, la consigne de couple C.

Dans le cas d'un onduleur de tension, le vecteur de commande est un vecteur de tension dont les coordonnées sont définies dans un repère fixe de l'onduleur.

Pour calculer ce vecteur de tension, l'unité 18 comprend notamment un module 24 d'établissement du courant de consigne $\vec{I}_c$ permettant d'atteindre à la fin de l'intervalle T, les consignes propres d'état $\vec{\Psi}_c$, et un module 25 de calcul du vecteur de tension à appliquer en moyenne pendant l'intervalle T pour obtenir à l'expiration de cet intervalle T un courant égal au courant de consigne établie par le module 24.

L'unité 18 peut comprendre aussi un observateur 26 propre à estimer le vecteur de flux des aimants $\vec{\Phi}_a$ du moteur 12 à partir des mesures de courant et de vitesse angulaire.

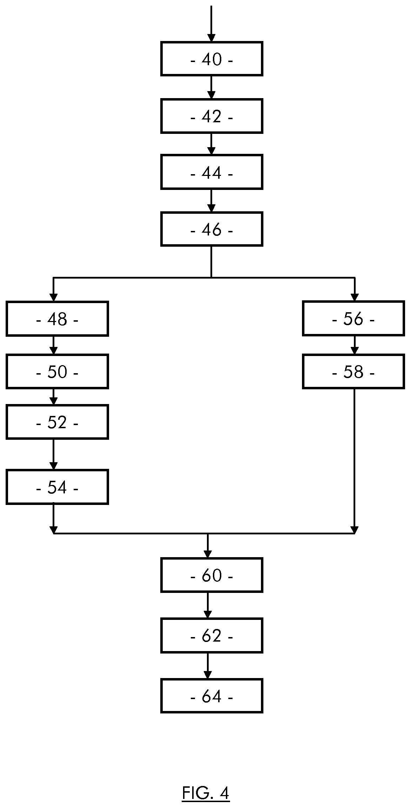

L'unité 18 est réalisée à partir d'un ou plusieurs calculateurs électroniques. Typiquement, l'unité 18 est réalisée à partir d'un calculateur programmable conventionnel apte à exécuter des instructions enregistrées sur un support 28 d'enregistrement d'informations. A cet effet, le support 28 comporte des instructions pour l'exécution du procédé de la figure 4 lorsque ces instructions sont exécutées par l'unité 18.

Le fonctionnement du système 10 va maintenant être décrit en regard du procédé de la figure 4.

Initialement, lors d'une étape 40, une période T d'échantillonnage est choisie. Dans la suite de cette description, on note $t_n$ l'instant auxquels sont échantillonnées les différentes mesures réalisées par les capteurs 20, 21 et 22 et $t_n+T$ le prochain instant d'échantillonnage. Ces instants $t_n$ et $t_n+T$ sont séparés par l'intervalle de temps T.

Ici, l'intervalle T est choisi suffisamment petit pour que pendant un seul intervalle T l'intensité du courant n'ait pas le temps d'atteindre sa valeur asymptotique, c'est-à-dire $U_c/R_s$, où $R_s$ est la résistance statorique du moteur 12. En effet, cette valeur asymptotique peut être jusqu'à cent fois plus élevée qu'une limite supérieure acceptable pour l'intensité du courant. A cet effet, l'intervalle T est donc choisi strictement inférieur à $5\tau$. De préférence, l'intervalle T est choisi inférieur à $\frac{\tau}{5}$ ou à $\frac{\tau}{10}$. Ici, dans le contexte des véhicules électriques, l'intervalle T est généralement inférieur à 20 ms.

Il est également intéressant de choisir un intervalle T qui ne soit pas trop petit de manière à ce que l'intensité du courant ait le temps de varier de façon significative entre les instants $t_n$ et $t_n+T$. A cet effet, ici, l'intervalle T est choisi supérieur à 100 µs.

Ensuite, à l'instant $t_n$, lors d'une étape 42, la stratégie permettant le choix du courant de consigne $\vec{I}_c$ est adoptée, en fonction du couple de consigne C, de la limite de tension de ligne de la caténaire et de la limite de courant de l'onduleur.

Lors d'une étape 44, le capteur 22 mesure la position mécanique angulaire $\rho_0$ du rotor. La vitesse angulaire $\omega$ est ensuite calculée par dérivation de la position ou éventuellement directement mesurée par un capteur de vitesse spécifique.

Lors de l'étape 46, les variables intermédiaires : $\mu_1$ à $\mu_4$, $e_1$, $e_2$, $\zeta_1$ et $\zeta_2$, $\xi_{d1}$, $\xi_{q1}$, $\xi_{d2}$ et $\xi_{q2}$, sont calculées par le module de calcul 25 à partir des données paramètres du moteur ($R_s$, $L_d$, $L_q$, $L_{md}$, $L_{mq}$, $\Phi_a$), des valeurs mesurées de la vitesse angulaire $\omega$ et enregistrées par exemple dans le support 28, selon les équations [4] à [7], puis [14].

Ensuite, lors d'une étape 48, l'intensité initiale du courant statorique $\vec{I}_0$ est mesurée et, lors d'une étape 50 une estimation par l'observateur 26, du vecteur du flux des aimants initial $\vec{\Phi}_a$ peut être réalisée à partir de la mesure des courants.

Lorsque le vecteur flux des aimants initial $\vec{\Phi}_a$ est établi à partir de l'estimation de l'étape 50, l'argument $\rho_0$ est alors calculé lors d'une étape 52 par le module de calcul 25, au lieu d'être mesuré à l'étape 44.

Ensuite, les vecteurs propres d'état initiaux $\vec{\Psi}_{10}$ et $\vec{\Psi}_{20}$ sont calculés par le module de calcul 25 lors d'une étape 54 à l'aide des relations suivantes :

$$\begin{bmatrix} \vec{\Psi}_{10} \\ \vec{\Psi}_{20} \end{bmatrix}_{(d_0,q_0)} = \begin{bmatrix} L_d \cdot I_{d_0 0} + \zeta_1 \cdot L_q \cdot I_{q_0 0} + \xi_{d1} \cdot \left\| \vec{\Phi}_a \right\| \\ L_d \cdot I_{d_0 0} + \zeta_2 \cdot L_q \cdot I_{q_0 0} + \xi_{d2} \cdot \left\| \vec{\Phi}_a \right\| \end{bmatrix}$$

En parallèle aux étapes 48 à 54, la consigne de courant $\vec{I}_c$ est établie par le module d'établissement 24, lors d'une étape 56 à l'aide du résultat du calcul de l'étape 42 avec la relation : $\vec{I}_c = I_{dc} + i \cdot I_{qc}$.

Les vecteurs propres d'états de consigne $\vec{\Psi}_{1c}$ et $\vec{\Psi}_{2c}$ sont alors établis par le module d'établissement 24 lors d'une étape 58 à l'aide des relations suivantes après changements d'axes de $(d,q)$ vers $(d_0,q_0)$ :

$$\begin{bmatrix} \vec{\Psi}_{1c} \\ \vec{\Psi}_{2c} \end{bmatrix}_{(d_0,q_0)} = \begin{bmatrix} L_d \cdot I_{d_0 c} + \zeta_1 \cdot L_q \cdot I_{q_0 c} + \xi_{d1} \cdot \Phi_{d_0 P} + \xi_{q1} \cdot \Phi_{q_0 P} \\ L_d \cdot I_{d_0 c} + \zeta_2 \cdot L_q \cdot I_{q_0 c} + \xi_{d2} \cdot \Phi_{d_0 P} + \xi_{q2} \cdot \Phi_{q_0 P} \end{bmatrix}$$

Une fois les vecteurs propres d'état de consigne $\vec{\Psi}_c$ et initial $\vec{\Psi}_0$ établis, lors d'une étape 60, le vecteur de tension est calculé par le module de calcul 25 à l'aide des relations suivantes :

$$V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

$$V_{q_0} = -\frac{e_2 \cdot \left[ \vec{\Psi}_{1c} - \vec{\Psi}_{10} \cdot e^{\mu_1 \cdot T} \right] - e_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

Le vecteur de tension $\vec{V}_{(d_0, q_0)}$ est converti par le module de calcul 25 lors de l'étape 62 par une transformée de Concordia en un vecteur de tension de commande calculé dans le repère orthonormé fixe ($\alpha$, $\beta$) par rapport au stator du moteur. La transformée de Concordia utilisée pour le passage du triphasé équilibré au repère fixe par rapport au stator ($\alpha$, $\beta$) est la transformée qui conserve la puissance. Les modules des tensions, des courants et des flux des phases sont donc multipliés par $\sqrt{3/2}$.

Ce vecteur moyen de tension calculé est alors appliqué continûment, par Modulation de Largeur d'Impulsions (MLI) (« Pulse Width Modulation » en anglais), lors d'une étape 64, par l'onduleur 14 dans l'intervalle T.

Ensuite, les étapes 40 à 64 sont réitérées pour un nouvel intervalle T.

De nombreux autres modes de réalisation de ce système et de ce procédé de commande sont possibles. Par exemple, le vecteur initial de flux magnétique est, en variante, mesuré et non pas estimé par l'intermédiaire d'un observateur.

Le système 10 a été décrit dans le cas particulier où le moteur est commandé à partir d'un onduleur commandable. Toutefois, ce qui a été décrit s'applique également au cas de moteurs commandés par des hacheurs commandables, des amplificateurs ou des redresseurs commandables, permettant d'obtenir la tension de commande calculée.

## Revendications

1. Procédé de commande d'un moteur (12) synchrone à aimants permanents enterrés de constante de temps statorique ($\tau$), ce procédé consistant à appliquer par un onduleur alimentant le moteur et pendant une période (T) de calcul, un vecteur de tension ($\vec{V}$) permettant d'obtenir, à l'expiration de la période (T), une force mécanique développée par la machine égale à une consigne pré-déterminée de force mécanique (C), **caractérisé en ce que** ce procédé est un procédé de régulation à réponse pile comportant :

   - une étape (54) de calcul d'un vecteur propre d'état initial ($\vec{\Psi}_0$) du moteur représentatif du vecteur de courant statorique ($\vec{I}$) et du vecteur flux des aimants ($\vec{\Phi}_a$) dans le repère rotorique tournant initial ($d_0, q_0$) en début de période (T),
   - une étape (56) d'établissement dans le repère rotorique tournant prédit ($d, q$) d'un courant de consigne ($\vec{I}_c$) permettant d'atteindre à la fin de la période (T) la consigne pré-déterminée de force mécanique (C),
   - une étape (58) d'établissement d'un vecteur propre d'état de consigne ($\vec{\Psi}_c$) du moteur représentatif du courant de consigne ($\vec{I}_c$) et du vecteur flux des aimants prédit ($\vec{\Phi}_P$) dans le repère rotorique tournant initial ($d_0, q_0$) en fin de période (T),
   - une étape de calcul (62) du vecteur de tension ($\vec{V}$) dans le repère statorique fixe ($\alpha, \beta$) à appliquer par l'onduleur (14) au moteur (12) pour le piloter,
   - une étape d'application (64) sur le moteur (12) du vecteur de tension ($\vec{V}$) par l'onduleur (14) pour obtenir à l'expiration de la période (T) un courant égal au courant de consigne ($\vec{I}_c$), la période (T) étant strictement inférieure à 5 ($\tau$).

2. Procédé selon la revendication 1, **caractérisé en ce que** le vecteur de tension ($\vec{V}$) est une solution des relations suivantes :

$$V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

$$V_{q_0} = -\frac{e_2 \cdot \left[\vec{\Psi}_{1c} - \vec{\Psi}_{10} \cdot e^{\mu_1 \cdot T}\right] - e_1 \cdot \left[\vec{\Psi}_{2c} - \vec{\Psi}_{20} \cdot e^{\mu_2 \cdot T}\right]}{e_1 \cdot e_2 \cdot (\zeta_2 - \zeta_1)}$$

où :

- $e_1$, $e_2$, $\zeta_1$, $\zeta_2$, $\mu_1$, $\mu_2$ sont des variables intermédiaires dépendant uniquement de paramètres physiques représentatifs du moteur (12) et de la vitesse angulaire ($\omega$),
- $\vec{\Psi}_{1c}$, $\vec{\Psi}_{2c}$ sont les coordonnées du vecteur propre d'état de consigne ($\vec{\Psi}_c$) à la fin de la période (T) dans le repère rotorique tournant initial ($d_0$, $q_0$) dont l'axe des abscisses est aligné sur la direction du flux magnétique à l'instant initial,
- $\vec{\Psi}_{10}$, $\vec{\Psi}_{20}$ sont les coordonnées du vecteur propre d'état initial ($\vec{\Psi}_0$) au début de la période (T) dans le repère rotorique tournant initial ($d_0,q_0$) dont l'axe des abscisses est aligné sur la direction du flux magnétique initial.

3. Procédé selon la revendication 1 ou 2, **caractérisé en ce que** le vecteur propre d'état initial ($\vec{\Psi}_0$) est établi à partir de l'équation discrétisée suivante :

$$\begin{bmatrix} \vec{\Psi}_{10} \\ \vec{\Psi}_{20} \end{bmatrix}_{(d_0,q_0)} = \begin{bmatrix} L_d \cdot I_{d_0 0} + \zeta_1 \cdot L_q \cdot I_{q_0 0} + \xi_{d1} \cdot \left\|\vec{\Phi}_a\right\| \\ L_d \cdot I_{d_0 0} + \zeta_2 \cdot L_q \cdot I_{q_0 0} + \xi_{d2} \cdot \left\|\vec{\Phi}_a\right\| \end{bmatrix}$$

reliant entre elles le vecteur de courant statorique initial $\vec{I}_0 = \left(I_{d_0 0}, I_{q_0 0}\right)$, le vecteur de flux des aimants ($\vec{\Phi}_a$) les paramètres physiques $L_d$, $L_q$, et les paramètres intermédiaires $\zeta_1$, $\zeta_2$, $\xi_{d1}$, $\xi_{d2}$ dépendants uniquement de paramètres physiques du moteur et de la vitesse angulaire ($\omega$).

4. Procédé selon la revendication 1 ou 2, **caractérisé en ce que** le vecteur d'état propre ($\vec{\Psi}_c$) est établi à partir de l'équation discrétisée suivante :

$$\begin{bmatrix} \vec{\Psi}_{1c} \\ \vec{\Psi}_{2c} \end{bmatrix}_{(d_0,q_0)} = \begin{bmatrix} L_d \cdot I_{d_0 c} + \zeta_1 \cdot L_q \cdot I_{q_0 c} + \xi_{d1} \cdot \Phi_{d_0 P} + \xi_{q1} \cdot \Phi_{q_0 P} \\ L_d \cdot I_{d_0 c} + \zeta_2 \cdot L_q \cdot I_{q_0 c} + \xi_{d2} \cdot \Phi_{d_0 P} + \xi_{q2} \cdot \Phi_{q_0 P} \end{bmatrix}$$

reliant entre elles le vecteur de courant statorique de consigne $\vec{I}_c = \left(I_{d_0 c}, I_{q_{O} c}\right)$ à atteindre en fin de période (T),

le vecteur de flux des aimants prédit $\vec{\Phi}_P = \left(\Phi_{d_0 P}, \Phi_{q_0 P}\right)$ à atteindre en fin de période (T), les paramètres physiques $L_d$, $L_q$, et les paramètres intermédiaires $\zeta_1$, $\zeta_2$, $\xi_{d1}$, $\xi_{d2}$, $\xi_{q1}$, $\xi_{q2}$ dépendants uniquement de paramètres physiques du moteur (12) et de la vitesse angulaire ($\omega$).

5. Procédé selon l'une quelconque des revendications 1 à 4, **caractérisé en ce que** le fonctionnement du moteur est modélisé par un vecteur d'état ($\vec{X}$) formé du vecteur de courant statorique ($\vec{I}$) et du vecteur de flux des aimants ($\vec{\Phi}_a$).

6. Support (28) d'enregistrement d'informations, **caractérisé en ce qu'**il comporte des instructions pour l'exécution d'un procédé selon l'une quelconque des revendications 1 à 5, lorsque ces instructions sont exécutées par un calculateur électronique.

7. Unité de commande (18) à réponse pile d'un moteur (12) synchrone à aimants permanents enterrés alimenté par une source (16) de tension et commandable à partir d'un onduleur (14), **caractérisée en ce que** cette unité comporte :

- un module d'établissement (24) dans le repère rotorique tournant prédit (*d*,*q*) d'un courant de consigne ($\vec{I}_c$)

permettant d'atteindre à la fin d'un intervalle (T) une consigne de force mécanique (C) sans dépasser ni la tension maximale de la source (16) de tension du moteur (12), ni le courant maximum pour lequel a été dimensionné l'onduleur (14), et d'un vecteur propre d'état de consigne ($\vec{\Psi}_c$) du moteur représentatif du courant de consigne ($\vec{I}_c$) et du vecteur flux des aimants prédit ($\vec{\Phi}_P$) dans le repère rotorique tournant initial ($d_0,q_0$) en fin de période (T),

- un module de calcul (25) d'un vecteur de tension ($\vec{V}$) à appliquer continûment pendant l'intervalle (T) dans le repère statorique fixe ($\alpha, \beta$) pour obtenir à l'expiration de cet intervalle (T) un courant égal au courant de consigne ($\vec{I}_c$) établi par le module d'établissement (24), le vecteur de tension ($\vec{V}$) étant calculé en fonction du vecteur propre d'état de consigne ($\vec{\Psi}_c$) établi par le module d'établissement (24) et en fonction d'un vecteur propre d'état initial ($\vec{\Psi}_0$) du moteur, représentatif du vecteur de courant statorique ($\vec{I}$) et du vecteur flux des aimants ($\vec{\Phi}_a$) dans le repère rotorique tournant initial ($d_0,q_0$) en début de période (T), calculé préalablement par le module de calcul (25).

8. Véhicule électrique comportant au moins un moteur (12) de traction du véhicule électrique, un onduleur commandable (14) comportant des interrupteurs électroniques de puissance propre à faire varier la tension du moteur (12) de traction, et donc son courant et par suite son couple, des capteurs (20), (21), (22) ou des estimateurs (26) propres à mesurer ou à estimer l'intensité des courants du moteur (12) ainsi que la position du flux des aimants permanents, **caractérisé en ce que** le véhicule comporte une unité de commande (18) selon la revendication 7 pour produire les signaux aptes à mettre en conduction ou à bloquer les interrupteurs électroniques de puissance de l'onduleur (14) permettant de faire varier la tension sur le moteur (12).

**Patentansprüche**

1. Verfahren zum Steuern eines eine Statorzeitkonstante ($\tau$) aufweisenden Synchronmotors (12) mit vergrabenen Permanentmagneten, wobei dieses Verfahren es aufweist, mittels eines Wechselrichters, welcher den Motor versorgt, und während eines Berechnungszeitraums (T) einen Spannungsvektor ($\vec{V}$), welcher es erlaubt, bei Ablauf des Zeitraums (T) eine von der Maschine entwickelte mechanische Kraft, die gleich einem vorbestimmten Sollwert der mechanischen Kraft (C) ist, zu erzielen, anzulegen, **gekennzeichnet dadurch, dass** das Verfahren ein Verfahren zur Dead-Beat-Regelung ist, welches aufweist:

- einen Schritt (54) der Berechnung eines Eigenvektors des Startzustands ($\vec{\Psi}_0$) des Motors, welcher repräsentativ für den Vektor des Statorstroms ($\vec{I}$) und den Vektorfluss der Magneten ($\vec{\phi}_a$) in dem drehenden Start-Rotorkoordinatensystem ($d_0,q_0$) zu Beginn des Zeitraums (T) ist,
- einen Schritt (56) des Erstellens, in dem vorausgesagten drehenden Rotorkoordinatensystem (d,q), eines Sollstroms ($\vec{I}_c$), welcher es erlaubt, am Ende des Zeitraums (T) den vorbestimmten Sollwert der mechanischen Kraft (C) zu erzielen,
- einen Schritt (58) des Erstellens eines Eigenvektors des Sollzustands ($\vec{\Psi}_c$) des Motors, welcher repräsentativ für den Sollstrom ($\vec{I}_c$) und den vorausgesagten Flussvektor der Magnete ($\vec{\phi}_P$) in dem drehenden Start-Rotorkoordinatensystem ($d_0,q_0$) am Ende des Zeitraums (T) ist,
- einen Schritt des Berechnens (62) des Spannungsvektors ($\vec{V}$) in dem ortsfesten Statorkoordinatensystem ($\alpha,\beta$), welcher mittels des Wechselrichters (14) an den Motor (12) für dessen Steuerung anzulegen ist,
- einen Schritt des Anlegens (64) des Spannungsvektors ($\vec{V}$) an den Motor (12) mittels des Wechselrichters (14), um bei Ablauf des Zeitraums (T) einen Strom zu erzielen, welcher gleich dem Sollstrom ($\vec{I}_c$) ist, wobei der Zeitraum (T) streng kleiner als 5 ($\tau$) ist.

2. Verfahren gemäß dem Anspruch 1, **gekennzeichnet dadurch, dass** der Spannungsvektors ($\vec{V}$) eine Lösung der folgenden Beziehungen ist:

$$V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

$$V_{q_0} = -\frac{e_2 \cdot \left[ \vec{\Psi}_{1c} - \vec{\Psi}_{10} \cdot e^{\mu_1 \cdot T} \right] - e_1 \cdot \left[ \vec{\Psi}_{2c} - \vec{\Psi}_{20} \cdot e^{\mu_2 \cdot T} \right]}{e_1 \cdot e_2 \cdot \left( \zeta_2 - \zeta_1 \right)}$$

wobei:

- $e_1$, $e_2$, $\zeta_1$, $\zeta_2$, $\mu_1$, $\mu_2$ Zwischenvariablen sind, welche ausschließlich von den physikalischen Parametern, welche für den Motor (12) repräsentativ sind, und von der Winkelgeschwindigkeit ($\omega$) abhängen,
- $\vec{\Psi}_{1c}$, $\vec{\Psi}_{2c}$ die Koordianten des Eigenvektors des Sollzustands ($\vec{\Psi}_c$) am Ende des Zeitraums (T) in dem drehenden Start-Rotorkoordinatensystem ($d_0, q_0$), dessen Achse der Abszissen nach der Richtung des magnetischen Flusses im Startzeitpunkt ausgerichtet ist, sind,
- $\vec{\Psi}_{10}$, $\vec{\Psi}_{20}$ die Koordianten des Eigenvektors des Startzustands ($\vec{\Psi}_0$) am Beginn des Zeitraums (T) in dem drehenden Start-Rotorkoordinatensystem ($d_0, q_0$), dessen Achse der Abszissen nach der Richtung des initialen magnetischen Flusses ausgerichtet ist, sind.

3. Verfahren gemäß dem Anspruch 1 oder 2, **gekennzeichnet dadurch, dass** der Eigenvektor des Startzustands ($\vec{\Psi}_0$) aus der folgenden diskretisierten Gleichung erstellt wird:

$$\begin{bmatrix} \vec{\Psi}_{10} \\ \vec{\Psi}_{20} \end{bmatrix}_{(d_0, q_0)} = \begin{bmatrix} L_d \cdot I_{d_0 0} + \zeta_1 \cdot L_q \cdot I_{q_0 0} + \xi_{d1} \cdot \left\| \vec{\Phi}_a \right\| \\ L_d \cdot I_{d_0 0} + \zeta_2 \cdot L_q \cdot I_{q_0 0} + \xi_{d2} \cdot \left\| \vec{\Phi}_a \right\| \end{bmatrix}$$

welche den Vektor des Start-Statorstroms $\vec{I}_0 = \left( I_{d_0 0}, I_{q_0 0} \right)$, den Vektor des Flusses der Magneten ($\vec{\phi}_a$), die physikalischen Parameter $L_d$, Lq und die Zwischenparameter $\zeta_1$, $\zeta_2$, $\xi_{d1}$, $\xi_{d2}$, welche ausschließlich von den physikalischen Parametern des Motors und von der Winkelgeschwindigkeit ($\omega$) abhängen, miteinander verbindet.

4. Verfahren gemäß dem Anspruch 1 oder 2, **gekennzeichnet dadurch, dass** der Eigenzustandsvektor ($\vec{\Psi}_c$) aus der folgenden diskretisierten Gleichung erstellt wird:

$$\begin{bmatrix} \vec{\Psi}_{1c} \\ \vec{\Psi}_{2c} \end{bmatrix}_{(d_0, q_0)} = \begin{bmatrix} L_d \cdot I_{d_0 c} + \zeta_1 \cdot L_q \cdot I_{q_0 c} + \xi_{d1} \cdot \Phi_{d_0 P} + \xi_{q1} \cdot \Phi_{q_0 P} \\ L_d \cdot I_{d_0 c} + \zeta_2 \cdot L_q \cdot I_{q_0 c} + \xi_{d2} \cdot \Phi_{d_0 P} + \xi_{q2} \cdot \Phi_{q_0 P} \end{bmatrix}$$

welche den am Ende des Zeitraums (T) zu erreichenden Soll-Statorstromvektor $\vec{I}_c = \left( I_{d_0 c}, I_{q_0 c} \right)$, den am Ende des Zeitraums (T) zu erreichenden Vektor des vorausgesagten Flusses der Magneten $\vec{\phi}_P = \left( \phi_{d_0 P}, \phi_{q_0 P} \right)$, die physikalischen Parameter $L_d$, Lq und die Zwischenparameter $\zeta_1$, $\zeta_2$, $\xi_{d1}$, $\xi_{d2}$, $\xi_{q1}$, $\xi_{q2}$, welche ausschließlich von den physikalischen Parametern des Motors und von der Winkelgeschwindigkeit ($\omega$) abhängen, miteinander verbindet.

5. Verfahren gemäß irgendeinem der Ansprüche 1 bis 4, **gekennzeichnet dadurch, dass** der Betrieb des Motors mittels eines Zustandsvektors ($\vec{X}$), welcher aus dem Vektor des Statorstroms ($\vec{I}$) und dem Vektor des Flusses der Magneten ($\vec{\phi}_a$) gebildet wird, modelliert wird.

6. Informationsaufzeichnungsträger (28), **dadurch gekennzeichnet, dass** er Anweisungen zur Ausführung eines Verfahrens gemäß irgendeinem der Ansprüche 1 bis 5, wenn diese Anweisungen mittels eines elektronischen Rechners ausgeführt werden, aufweist.

7. Einheit zur Dead-Beat-Steuerung (18) eines Synchronmotors (12) mit vergrabenen Permanentmagneten, welcher mittels einer Quelle (16) einer Spannung versorgt wird und mittels eines Wechselrichters (14) steuerbar ist, **dadurch gekennzeichnet, dass** diese Einheit aufweist:

- ein Modul zum Erstellen (24) eines Sollstroms ($\vec{I}_c$) in dem vorausgesagten drehenden Rotorkoordinatensystem (d, q), welcher es erlaubt, am Ende eines Intervalls (T) einen Sollwert der mechanischen Kraft (C) zu erzielen, ohne die maximale Spannung der Quelle (16) der Spannung des Motors (12) und ohne den maximalen Strom, für welchen der Wechselrichter (14) ausgelegt ist, zu überschreiten, und eines Eigenvektors des Sollzustands ($\vec{\Psi}_c$) des Motors, welcher für den Sollstrom ($\vec{I}_c$) und den vorausgesagten Vektorfluss der Magnete ($\vec{\phi}_P$) in dem drehenden Start-Rotorkoordinatensystem (d$_0$, q$_0$) am Ende des Zeitraums (T) repräsentativ ist,
- ein Modul zur Berechnung (25) eines Spannungsvektors ($\vec{V}$), der während des Intervalls (T) in dem ortsfesten Statorkoordinatensystem ($\alpha,\beta$) kontinuierlich anzulegen ist, um beim Ablauf des Intervalls (T) einen Strom, welcher gleich dem durch das Modul zum Erstellen (24) erstellten Sollstrom ($\vec{I}_c$) ist, zu erhalten, wobei der Spannungsvektor ($\vec{V}$) in Abhängigkeit von dem durch das Modul zum Erstellen (24) erstellten Eigenvektor des Sollzustands ($\vec{\Psi}_c$) und in Abhängigkeit von einem zuvor durch das Modul zur Berechnung (25) berechneten Eigenvektor des Startzustands ($\vec{\Psi}_0$) des Motors, welcher repräsentativ für den Vektor des Statorstroms ($\vec{I}$) und den Vektorfluss der Magneten ($\vec{\phi}_a$) in dem drehenden Start-Rotorkoordinatensystem (d$_0$,q$_0$) zu Beginn des Zeitraums (T) ist, berechnet wird.

8. Elektrisches Fahrzeug, aufweisend mindestens einen Traktionsmotor (12) des elektrischen Fahrzeugs, einen steuerbaren, elektronische Leistungsschalter aufweisenden Wechselrichter (14), welcher dazu geeignet ist, die Spannung des Traktionsmotors (12) und damit dessen Strom und infolge dessen Drehmoment variieren zu lassen, Sensoren (20), (21), (22) oder Schätzeinrichtungen (26), welche dazu eingerichtet sind, die Stärke der Ströme des Motors (12) sowie die Position des Flusses der Permanentmagneten zu messen oder zu schätzen, **dadurch gekennzeichnet, dass** das Fahrzeug eine Einheit zur Steuerung (18) gemäß dem Anspruch 7 aufweist, um Signale zu erzeugen, welche in der Lage sind, die elektronischen Leistungsschalter des Wechselrichters (14) in den leitenden Zustand zu versetzen oder zu sperren, wobei das Variieren der Spannung an dem Motor (12) ermöglicht wird.

## Claims

1. A method for controlling an embedded permanent-magnet synchronous motor (12) with a stator time constant ($\tau$), the method comprising applying, by an inverter supplying the motor and for a computation period (T), a voltage vector ($\vec{V}$) for obtaining, when the period (T) has elapsed, a mechanical force developed by the machine that is equal to a predetermined mechanical force setpoint (C), **characterised in that** the method is a deadbeat control method comprising:

- a step (54) of computing an initial state eigenvector ($\vec{\Psi}_0$) of the motor representing the stator current vector ($\vec{I}$) and the flux vector ($\vec{\Phi}_a$) of the magnets in the initial rotor rotating reference frame (d$_0$, q$_0$) at the start of the period (T);
- a step (56) of generating, in the predicted rotor rotating reference frame (d, q), a setpoint current ($\vec{I}_c$) for reaching the predetermined mechanical force setpoint (C) at the end of the period (T);
- a step (58) of generating a setpoint state eigenvector ($\vec{\Psi}_c$) of the motor representing the setpoint current ($\vec{I}_c$) and the predicted flux vector ($\vec{\Phi}_P$) of the magnets in the initial rotor rotating reference frame (d$_0$, q$_0$) at the end of the period (T);
- a step (62) of computing the voltage vector ($\vec{V}$) in the fixed stator reference frame ($\alpha$, $\beta$) to be applied by the inverter (14) to the motor (12) in order to control the motor;
- a step (64) of applying, by the inverter (14), the voltage vector ($\vec{V}$) to the motor (12) in order to obtain a current equal to the setpoint current ($\vec{I}_c$) when the period (T) has elapsed, the period (T) being strictly less than 5 ($\tau$).

2. The method according to claim 1, **characterised in that** the voltage vector ($\vec{V}$) is a solution of the following relations:

$$V_{d_0} = \frac{e_2 \cdot \zeta_2 \cdot \left[ \vec{\Psi}_{1c} - \vec{\Psi}_{10} \cdot e^{\mu_1 \cdot T} \right] - e_1 \cdot \zeta_1 \cdot \left[ \vec{\Psi}_{2c} - \vec{\Psi}_{20} \cdot e^{\mu_2 \cdot T} \right]}{e_1 \cdot e_2 \cdot (\zeta_2 - \zeta_1)}$$

$$V_{q_0} = -\frac{e_2 \cdot \left[ \vec{\Psi}_{1c} - \vec{\Psi}_{10} \cdot e^{\mu_1 \cdot T} \right] - e_1 \cdot \left[ \vec{\Psi}_{2c} - \vec{\Psi}_{20} \cdot e^{\mu_2 \cdot T} \right]}{e_1 \cdot e_2 \cdot (\zeta_2 - \zeta_1)}$$

where:

- $e_1$, $e_2$, $\zeta_1$, $\zeta_2$, $\mu_1$, $\mu_2$ are intermediate variables solely dependent on physical parameters representing the motor (12) and the angular speed ($\omega$) ;
- $\vec{\Psi}_{1c}$, $\vec{\Psi}_{2c}$, are the coordinates of the setpoint state eigenvector ($\vec{\Psi}_c$) at the end of the period (T) in the initial rotor rotating reference frame ($d_0$, $q_0$), the axis of abscissae of which is aligned on the direction of the magnetic flux at the initial instant;
- $\vec{\Psi}_{10}$, $\vec{\Psi}_{20}$ are the coordinates of the initial state eigenvector ($\vec{\Psi}_0$) at the start of the period (T) in the initial rotor rotating reference frame ($d_0$, $q_0$), the axis of abscissae of which is aligned on the direction of the initial magnetic flux.

3. The method according to claim 1 or claim 2, **characterised in that** the initial state eigenvector ($\vec{\Psi}_0$) is generated on the basis of the following discrete equation:

$$\begin{bmatrix} \vec{\Psi}_{10} \\ \vec{\Psi}_{20} \end{bmatrix}_{(d_0, q_0)} = \begin{bmatrix} L_d \cdot I_{d_0 0} + \zeta_1 \cdot L_q \cdot I_{q_0 0} + \xi_{d1} \cdot \left\| \vec{\Phi}_a \right\| \\ L_d \cdot I_{d_0 0} + \zeta_2 \cdot L_q \cdot I_{q_0 0} + \xi_{d2} \cdot \left\| \vec{\Phi}_a \right\| \end{bmatrix}$$

linking together the initial stator current vector $\vec{I}_0 = (I_{d_0 0}, I_{q_0 0})$, the flux vector ($\vec{\Phi}_a$) of the magnets, the physical parameters $L_d$, $L_q$ and the intermediate parameters $\zeta_1$, $\zeta_2$, $\xi_{d1}$, $\xi_{d2}$ solely dependent on physical parameters of the motor and the angular speed ($\omega$).

4. The method according to claim 1 or claim 2, **characterised in that** the state eigenvector ($\vec{\Psi}_c$) is generated on the basis of the following discrete equation:

$$\begin{bmatrix} \vec{\Psi}_{1c} \\ \vec{\Psi}_{2c} \end{bmatrix}_{(d_0, q_0)} = \begin{bmatrix} L_d \cdot I_{d_0 c} + \zeta_1 \cdot L_q \cdot I_{q_0 c} + \xi_{d1} \cdot \Phi_{d_0 P} + \xi_{q1} \cdot \Phi_{q_0 P} \\ L_d \cdot I_{d_0 c} + \zeta_2 \cdot L_q \cdot I_{q_0 c} + \xi_{d2} \cdot \Phi_{d_0 P} + \xi_{q2} \cdot \Phi_{q_0 P} \end{bmatrix}$$

linking together the stator setpoint current vector $\vec{I}_c = (I_{d_0 c}, I_{q_0 c})$ to be reached at the end of the period (T), the predicted flux vector $\vec{\Phi}_P = (\Phi_{d_0 P}, \Phi_{q_0 P})$ of the magnets to be reached at the end of the period (T), the physical parameters $L_d$, $L_q$ and the intermediate parameters $\zeta_1$, $\zeta_2$, $\xi_{d1}$, $\xi_{d2}$, $\xi_{q1}$, $\xi_{q2}$ solely dependent on physical parameters of the motor (12) and the angular speed ($\omega$).

5. The method according to any one of claims 1 to 4, **characterised in that** the operation of the motor is modelled by a state vector ($\vec{X}$) formed from the stator current vector ($\vec{I}$) and the flux vector ($\vec{\Phi}_a$) of the magnets.

6. An information recording medium (28), **characterised in that** it comprises instructions for executing a method according to any one of claims 1 to 5, when these instructions are executed by an electronic computer.

7. A deadbeat control unit (18) for an embedded permanent-magnet synchronous motor (12) supplied by a voltage source (16) and controllable from an inverter (14), **characterised in that** the unit comprises:

- a module (24) for generating, in the predicted rotor rotating reference frame (d, q), a setpoint current ($\vec{I}_c$) for

reaching a mechanical force setpoint (C) at the end of a period (T), without exceeding either the maximum voltage of the voltage source (16) of the motor (12) or the maximum current for which the inverter (14) has been designed, and a setpoint state eigenvector ($\vec{\Psi}_c$) of the motor representing the current setpoint ($\vec{I}_c$) and the predicted flux vector ($\vec{\Phi}_P$) of the magnets in the initial rotor rotating reference frame ($d_0$, $q_0$) at the end of the period (T) ;

- a module (25) for computing a voltage vector ($\vec{V}$) to be permanently applied during the period (T) in the fixed stator reference frame ($\alpha$, $\beta$) in order to obtain, when this period (T) has elapsed, a current that is equal to the setpoint current ($\vec{I}_c$) generated by the generation module (24), the voltage vector ($\vec{V}$) being computed as a function of the setpoint state eigenvector ($\vec{\Psi}_c$) generated by the generation module (24) and as a function of an initial state eigenvector ($\vec{\Psi}_0$) of the motor, representing the stator current vector ($\vec{I}$) and the flux vector ($\vec{\Phi}_a$) of the magnets in the initial rotor rotating reference frame ($do$, $q_0$) at the start of the period (T), previously computed by the computation module (25).

8. An electric vehicle comprising at least one traction motor (12) for the electric vehicle, a controllable inverter (14) comprising electronic power switches able to vary the voltage of the traction motor (12), and thus its current and therefore its torque, sensors (20), (21), (22) or estimators (26) able to measure or to estimate the intensity of the currents of the motor (12), as well as the position of the flux of the permanent magnets, **characterised in that** the vehicle comprises a control unit (18) according to claim 7 for producing signals able to turn the electronic power switches of the inverter (14) on or off, allowing the voltage to be varied on the motor (12).

FIG.1

$$\vec{E}_d = -\omega_s \cdot L_{mq} \cdot I_q \qquad \vec{E}_q = \omega_s \cdot \left( L_{md} \cdot I_d + \Phi_a \right)$$

FIG. 2

FIG. 3

- 40 -

- 42 -

- 44 -

- 46 -

- 48 -

- 50 -

- 52 -

- 54 -

- 56 -

- 58 -

- 60 -

- 62 -

- 64 -

FIG. 4

**EP 2 179 499 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1233506 A
- EP 1484835 A
- US 20060284582 A

### Littérature non-brevet citée dans la description

- **N. BIANCHI ; S. BOLOGNANI.** Design considerations about synchronous motor drives for flux-weakening applications. 185-190